# EUROPEAN PATENT SPECIFICATION

(11) **EP 2 259 619 B1**
(45) Date of publication and mention of the grant of the patent: **06.05.2015**
(21) Application number: 09724162.4
(22) Date of filing: 27.03.2009
(51) Int. Cl.: H04W 28/00, H04W 72/12, H04W 8/26

(54) **DATA SCHEDULING METHOD, APPARATUS AND SYSTEM FOR BASE STATION**
DATEN-ZEITPLANUNGSVERFAHREN, VORRICHTUNG UND SYSTEM FÜR BASISSTATION
PROCÉDÉ, APPAREIL ET SYSTÈME DE PLANIFICATION DE DONNÉES POUR STATION DE BASE

(30) Priority: 27.03.2008 CN 200810066213
(43) Date of publication of application: 08.12.2010
(73) Proprietor: Huawei Technologies Co., Ltd., Longgang District Shenzhen, Guangdong 518129 (CN)
(72) Inventor: CHEN, Yanyan, Guangdong 518129 (CN); ZHENG, Xiaoxiao, Guangdong 518129 (CN)
(74) Representative: Körber, Martin Hans
(86) International application number: PCT/CN2009/071046
(87) International publication number: WO 2009/117972

(56) References cited:
- CN-A- 1 735 269
- CN-A- 1 856 154
- NOKIA SIEMENS NETWORKS ET AL: "Solution for mapping between HS-DSCH RNTI and E-RNTI", 3GPP DRAFT; R3-080797, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050163999, [retrieved on 2008-03-26]
- NOKIA SIEMENS NETWORKS ET AL: "On E-RNTI Allocation for UE with Enhanced UL in Cell_FACH", 3GPP DRAFT; R3-080796, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050163998, [retrieved on 2008-03-26]
- NOKIA SIEMENS NETWORKS ET AL: "Introduction of FACH DRX Scheme and Foreseen RAN3 Specification impact", 3GPP DRAFT; R3-080803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050164003, [retrieved on 2008-03-26]
- NOKIA CORPORATION ET AL: "Cell_FACH DRX Scheme", 3GPP DRAFT; R2-081048 CELL_FACH DRX SCHEME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080204, 4 February 2008 (2008-02-04), XP050138838, [retrieved on 2008-02-04]

## Description

### FIELD OF THE INVENTION

The present invention relates to the communications field, and more particularly to a technology of scheduling data of a base station in the mobile communications field.

### BACKGROUND OF THE INVENTION

After a performance of a mobile station that transmits uplink data by using a Random Access Channel (RACH) is enhanced, an Enhanced Dedicated Channel (E-DCH) may be used to transmit uplink data, so as to reduce delay of transmitting signaling and service data, improve a peak bit rate, and implement fast status migration. Such a non-cell dedicated status mobile station that may use the E-DCH as a transmission channel to transmit the uplink data is herein called a mobile station having an enhanced uplink access characteristic.

A network side assigns some common E-DCH resources to the mobile station having the enhanced uplink access characteristic in a cell. When such mobile station located in the cell transmits uplink data, the mobile station needs to compete for the common E-DCH resources in the cell.

While the mobile station succeeds in preempting and using the common E-DCH resources, the base station may record an identifier of the mobile station on an enhanced uplink channel, namely, an E-DCH Radio Network Temporary Identifier (E-RNTI), where the mobile station is using a certain common E-DCH resource (information such as the code word and power of an uplink control channel and an uplink data channel). After the mobile station succeeds in competing for a certain E-DCH resource, the resource cannot be used by other mobile stations in the cell unless the mobile station proactively releases the resource or the base station is forced to release the resource.

In addition, to ensure a better power-saving performance of the mobile station, the mobile station may receive data discontinuously according to configurations of the network side when the mobile station uses a High Speed Downlink Shared Channel (HS-DSCH) to receive data.

Because the mobile station uses the common E-DCH resources based on competition, the time that a certain mobile station occupies the common E-DCH resources cannot be too long. This is to avoid the case that other mobile stations in the cell are incapable of competing for the resources and therefore an uplink access fails. If the network side configures that the mobile station receives data discontinuously, the mobile station receives data discontinuously within the time when the mobile station occupies the common E-DCH resources. This causes that the use efficiency of the common E-DCH resources is reduced.

The document by NOKIA SIEMENS NETWORKS ET AL: "Solution for mapping between HS-DSCH RNTI and E-RNTI", 3GPP R3-080797, discloses that for HS-DSCH in Cell-FACH, H-RNTI is contained in the HS-DSCH DATA FRAME TYPE2, which is used for the HS-SCCH transmission but this can be identifier to Node B for the UE. And for E-DCH in Cell-FACH, it has been agreed that MAC-I header contains E-RNTI for collision detection but also can be identifier to Node B. Thus, Node B can link the HS-DSCH and E-DCH for the UE form the allocated H-RNTI and E-RNTI.

The document by NOKIA SIEMENS NETWORKS ET AL: "On E-RNTI Allocation for UE with Enhanced UL in Cell_FACH", 3GPP R3-080796, discloses E-RNTI allocation by node B.

The document by NOKIA SIEMENS NETWORKS ET AL: "Introduction of FACH DRX Scheme and Foreseen RAN3 Specification impact", 3GPP R3-080803, discloses that when UE has E-DCH resources allocated, it is not in DRX and can continuously receive on downlink. Furthermore, D3 also definitely discloses that FP: HS-DSCH DATA FRAME TYPE 2 used for HS-DSCH Transmission for UE in Cell-DCH and Cell-FACH should be utilized for the feature. Currently necessary changes are not identified.

### SUMMARY OF THE INVENTION

The embodiments of the present invention provide a method for scheduling data, so as to improve the use efficiency of the common Enhanced Dedicated Channel (E-DCH) resources.

The method for scheduling data of a base station according to the present invention includes: receiving, by a base station, an HS-DSCH data frame from a radio network controller; acquiring, by the base station, a Radio Network Temporary Identifier (E-RNTI) of a mobile station to which the HS-DSCH data frame is sent according to the HS-DSCH data frame; and if the base station determines that the mobile station is using a common E-DCH resource through determining that the E-RNTI of the mobile station matches one of E-RNTIs of mobile stations that succeed in the competition and are using common E-DCH resource, which are recorded by the base station, applying, by the base station, continuous scheduling for transmission of data in the HS-DSCH data frame towards the mobile station, and if the base station determines that the mobile station is not using a common E-DCH resource through determining that the E-RNTI of the mobile station does not match one of E-RNTIs of mobile stations that succeed in the competition and are using common E-DCH resource, which are recorded by the base station, applying, by the base station, discontinuous scheduling for transmission of data in the HS-DSCH data frame towards the mobile station.

The embodiments of the present invention provide a base station. The base station includes: a receiving unit, configured to receive an HS-DSCH data frame from a radio network controller; an acquisition unit, configured to acquire an E-RNTI of a mobile station to which the HS-DSCH data frame is sent according to the HS-DSCH data frame; a determining unit, configured to determine whether the mobile station is using a common E-DCH resource through determining whether the E-RNTI of the mobile station matches one of E-RNTIs of mobile stations that succeed in the competition and are using common E-DCH resource, which are recorded by the base station; and a scheduling unit, configured to apply continuous scheduling for transmission of data in the HS-DSCH data frame toward the mobile station if a determination result of the determining unit that the mobile station is using a common E-DCH resource, and to apply discontinuous scheduling for transmission of data in the HS-DSCH data frame towards the mobile station, if the determination result of the determining unit is that the mobile station is not using a common E-DCH resource.

According to the technical solution provided in this embodiment, a base station determines whether a mobile station occupies a common E-DCH resource according to an identifier in a downlink HS-DSCH data frame and then schedules downlink data continuously or discontinuously. This avoids the waste of the common E-DCH resource due to the use of the discontinuous scheduling when the mobile station occupies the common E-DCH resource, and therefore improving the utilization of the common E-DCH resource.

### BRIEF DESCRIPTION OF THE DRAWINGS

FIG. 1 is a schematic diagram of a process of a method for scheduling data according to Embodiment 1 of the present invention;
FIG. 2 is a schematic diagram of a process of a method for scheduling data according to Embodiment 2 of the present invention;
FIG. 3 is a schematic structural view of a base station according to Embodiment 3 of the present invention; and
FIG. 4 is a schematic structural view of a mobile communications system according to Embodiment 4 of the present invention.

### DETAILED DESCRIPTION OF THE EMBODIMENTS

The technical solutions according to the present invention are described below in detail with reference to the accompanying drawings and specific embodiments.

### Embodiment 1

In this embodiment, a Radio Network Controller (RNC) carries a Radio Network Temporary Identifier (E-RNTI) of a mobile station in a High Speed Downlink Shared Channel (HS-DSCH) data frame delivered to the mobile station. A base station responsible for scheduling data directly acquires the E-RNTI, determines whether the mobile station occupies a common Enhanced Dedicated Channel (E-DCH) resource according to the E-RNTI, and schedules data in the HS-DSCH data frame.

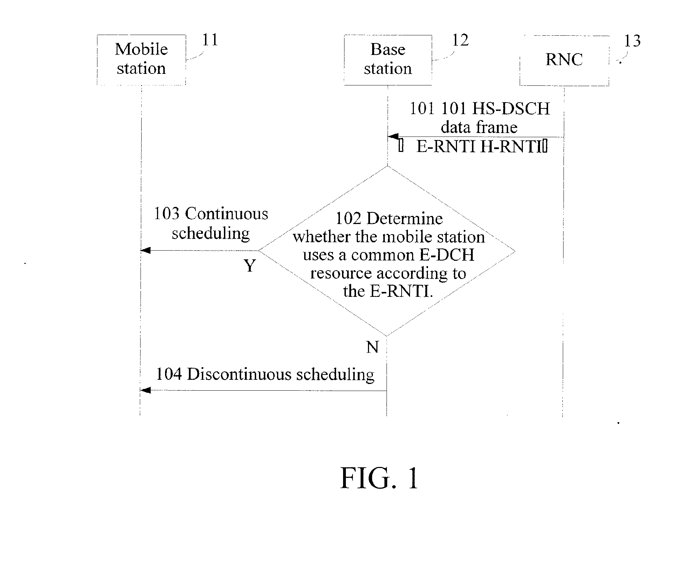

As shown in FIG. 1, the method for scheduling data according to this embodiment specifically includes the following steps.

In step 101, when transmitting downlink data to a mobile station 11 through an HS-DSCH, an RNC 13 carries, in an HS-DSCH data frame, an E-RNTI of the mobile station.

In step 102, when receiving the HS-DSCH data frame carrying the E-RNTI of the mobile station 11 delivered by the RNC 13, a base station determines whether the mobile station 11 uses a common E-DCH resource according to the E-RNTI of the mobile station 11 in the HS-DSCH data frame. If the common E-DCH resource is occupied, step 103 is performed. If the common E-DCH resource is not occupied, step 104 is performed.

According to the prior art, the HS-DSCH data frame may also carry a unique HS-DSCH Radio Network Temporary Identifier (H-RNTI) of the mobile station 11 on the HS-DSCH. When scheduling the data in the HS-DSCH data frame, the RNC 13 decides in which downlink data frames the downlink data is scheduled or in which downlink data frames the data is not scheduled for the mobile station according to the H-RNTI and measurement occasion parameters of a cell.

When the mobile station 11 competing for an uplink common E-DCH resource, an E-RNTI of the mobile station 11 on an uplink E-DCH is carried in a Media Access Control (MAC) header. Accordingly, a base station 12 may record E-RNTIs of mobile stations that succeed in the competition and are using the common E-DCH resource. In step 102, the base station 12 determines whether the E-RNTI of the mobile station 11 in the HS-DSCH data frame is in the E-RNTIs of the mobile stations using the common E-DCH resource recorded by the base station 12, or utilizes the recorded E-RNTIs of all the mobile stations initiating the competition to find out the mobile station 11 corresponding to the E-RNTI, thereby determining whether the mobile station 11 occupies the common E-DCH resource.

In step 103, schedule data in the HS-DSCH data frame continuously.

In step 104, schedule the data in the HS-DSCH data frame discontinuously.

According to the technical solution provided in this embodiment, an HS-DSCH data frame carries an E-RNTI of a mobile station 11, it is determined whether the mobile station occupies a common E-DCH resource according to the E-RNTI, and if the common E-DCH resource is occupied, data in the HS-DSCH data frame is scheduled continuously. Therefore, a base station 12 schedules downlink data according to the situation that the mobile station 11 occupies the common E-DCH resource. This avoids the waste of the common E-DCH resource due to the use of the discontinuous scheduling when the mobile station 11 occupies the common E-DCH resource, and therefore improving the utilization of the common E-DCH resource.

### Embodiment 2

In this embodiment, when a mapping relationship between an E-RNTI and an H-RNTI of a mobile station is established successfully in a base station, an RNC does not carry the E-RNTI of the mobile station in an HS-DSCH data frame delivered to the mobile station but only carries the H-RNTI of the mobile station on the HS-DSCH. The base station searches through the H-RNTI according to a mapping relationship between the E-RNTI and H-RNTI stored therein to acquire the E-RNTI of the mobile station, determines whether the mobile station occupies a common E-DCH resource according to the E-RNTI, and schedules data in the HS-DSCH data frame.

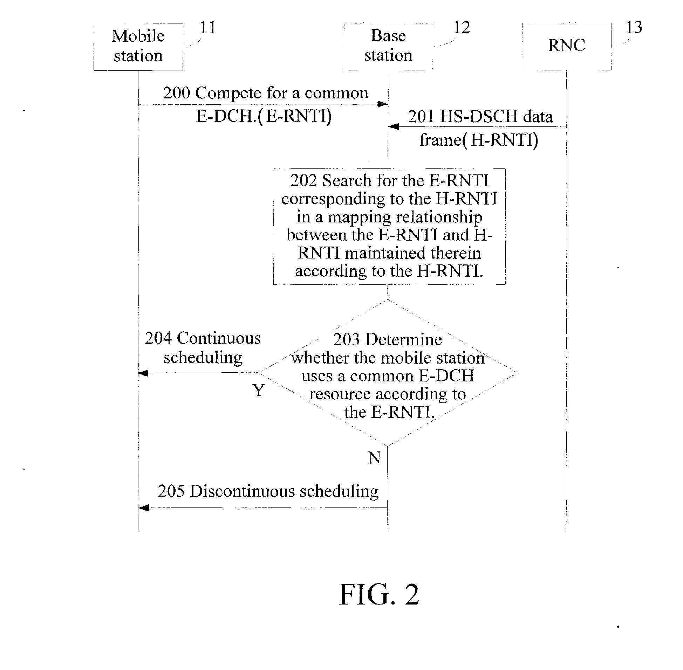

As shown in FIG. 2, the method for scheduling data according to this embodiment specifically includes the following steps.

In step 200, when competing for an uplink common E-DCH resource, the mobile station 11 carries an E-RNTI of the mobile station 11 on an uplink E-DCH in a Media Access Control (MAC) header.

After the mobile station 11 succeeds in competing for the common E-DCH resource, the base station 12 records the E-RNTI of the mobile station. The base station may record an E-RNTI list of a mobile station that succeeds in competing for the common E-DCH resource, or an E-RNTI list of all mobile stations that compete for the common E-DCH resource.

In step 201, the base station 12 receives an HS-DSCH data frame delivered to the mobile station 11 by the RNC 13, and the HS-DSCH data frame carries an H-RNTI of the mobile station.

In step 202, the base station 12 searches for the E-RNTI of the mobile station 11 corresponding to the H-RNTI in a mapping relationship between the E-RNTI and H-RNTI maintained therein according to the H-RNTI. If the E-RNTI corresponding to the mobile station 11 is found, step 203 is performed. If the E-RNTI corresponding to the mobile station 11 is not found, continuous scheduling is directly performed on data in the HS-DSCH data frame.

The mapping relationship between the E-RNTI and H-RNTI may be established according to the E-RNTI and H-RNTI of the mobile station 11 carried in the HS-DSCH data frame delivered to the mobile station 11 by the RNC 13 before. For example, when downlink data is transmitted to the mobile station between an RNC and a certain base station for the first time, an E-RNTI is carried in a data frame. After obtaining information of the identifiers in the data frame, the base station establishes a relation between the two identifiers.

Alternatively, the RNC 13 and base station 12 configure and map a mapping relationship thereof through signaling communication. For example, when the RNC 13 assigns an E-RNTI and/or H-RNTI for the mobile station 11 and notifies the base station 12 through signaling of an Iub interface, the base station stores the E-RNTI and/or H-RNTI of the mobile station 11 and the mapping relationship between the E-RNTI and the H-RNTI.

In this embodiment, if subsequent HS-DSCH data frames delivered by the RNC 13 carry the E-RNTI and H-RNTI of the mobile station 11, the base station may also store the mapping relationship between the E-RNTI and H-RNTI. If no previously stored mapping relationship between the two identifiers is found, the mapping relationship between the E-RNTI and H-RNTI of the mobile station 11 is established and subsequent determination in step 203 is performed.

In step 203, the base station 12 determines whether the mobile station 11 uses the common E-DCH resource according to the found E-RNTI of the mobile station 11. If the common E-DCH resource is occupied, step 204 is performed. If the common E-DCH resource is not occupied, step 205 is performed.

In step 203, the method that the base station 12 determines whether the mobile station 11 occupies the common E-DCH resource is the same as that in the Embodiment 1.

In step 204, schedule data in the HS-DSCH data frame continuously.

In step 205, schedule the data in the HS-DSCH data frame discontinuously.

According to the technical solution provided in this embodiment, a base station searches for a mapping relationship between the E-RNTI and H-RNTI maintained therein through an H-RNTI of a mobile station 11 carried in an HS-DSCH data frame to obtain an E-RNTI of the mobile station 11, determines whether the mobile station 11 occupies a common E-DCH resource according to the E-RNTI, and if the common E-DCH resource is occupied, schedules data in the HS-DSCH data frame continuously. In this way, the base station schedules downlink data according to the situation that the mobile station occupies the common E-DCH resource. This avoids the waste of the common E-DCH resource due to the use of the discontinuous scheduling when the mobile station occupies the common E-DCH resource, and therefore improving the utilization of the common E-DCH resource.

Further, it is necessary to explain that during the implementation of the method for scheduling data according to the embodiments of the present invention, an identifier may be further carried in the HS-DSCH data frame delivered to the mobile station 11 by the RNC 13, and the identifier is configured to indicate that the data in the HS-DSCH data frame may be discontinuously scheduled (DRX scheduling, where DRX is short for Discontinuous Reception), or the network configures discontinuous scheduling for the mobile station 11. If the base station 12 finds the identifier after receiving the HS-DSCH data frame, scheduling is performed according to the DRX parameters and a measurement occasion frame of the mobile station 11 may not be taken into account during the scheduling.

If the base station 12 does not find the identifier after receiving the HS-DSCH data frame and considers that the data in the HS-DSCH data frame needs to be continuously scheduled or the network does not configure discontinuous scheduling for the mobile station, continuous scheduling is directly performed on the data in the HS-DSCH data frame and the measurement occasion frame of the mobile station 11 needs to be taken into account during the data scheduling.

Further, an identifier may be further carried in the HS-DSCH data frame delivered by the RNC 13 to the mobile station 11, and the identifier is configured to indicate whether the base station needs to determine whether the mobile station 11 occupies the common E-DCH resource when scheduling the data in the HS-DSCH data frame.

When the enhanced uplink access characteristic and discontinuous reception characteristic of the mobile station 11 are configured in a bound mode, that is, when the mobile station 11 must use the two characteristics at the same time, the two identifiers may also serve as one identifier. For example, when the identifier in the HS-DSCH data frame indicates that the base station 12 needs to discontinuously schedule (that is, perform DRX) on the HS-DSCH data frame, the base station 12 needs to determine whether the mobile station 11 occupies the common E-DCH resource. If the identifier indicates that the base station 12 schedule the HS-DSCH data frame continuously, the base station 12 does not need to determine whether the mobile station 11 occupies the common E-DCH resource.

The identifier may be in various forms, for example, the identifier is in a form of "DRX mode startup activation time" or "E-RNTI". If the base station does not see the "DRX mode startup activation time" or "E-RNTI" identifier in the HS-DSCH data frame, it is unnecessary to determine whether the mobile station occupies the common E-DCH.

### Embodiment 3

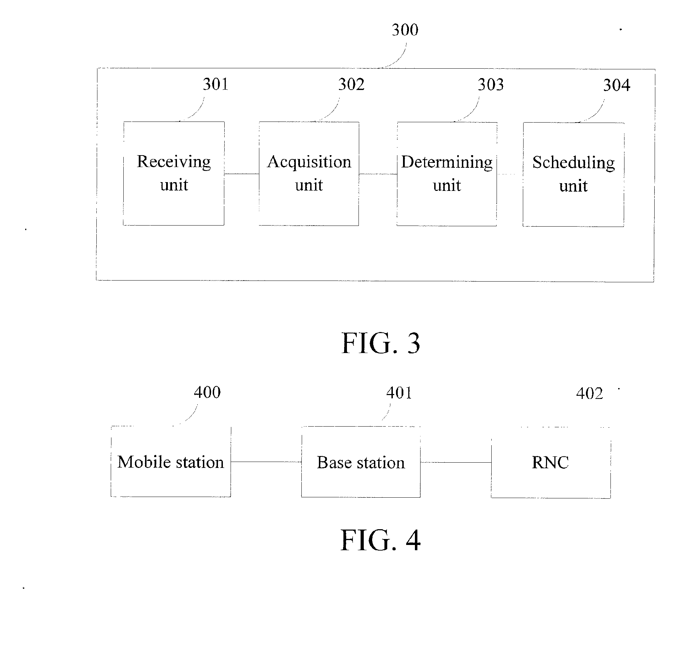

In this embodiment, a base station is provided to implement the method for scheduling data, wherein the method is provided in the foregoing embodiments. As shown in FIG. 3, the base station 300 includes a receiving unit 301, an acquisition unit 302, a determining unit 303, and a scheduling unit 304.

The receiving unit 301 receives the HS-DSCH data frame, the acquisition unit 302 acquires the E-RNTI of the mobile station, the determining unit 303 determines whether the mobile station occupies the common E-DCH resource according to the E-RNTI acquired by the acquisition unit, and when a determination result of the determining unit 303 is that the mobile station occupies the common E-DCH resource, the scheduling unit 304 schedules the data in the HS-DSCH data frame continuously.

When the HS-DSCH data frame received by the receiving unit 301 carries the E-RNTI of the mobile station, the acquisition unit 302 directly acquires the E-RNTI of the mobile station from the HS-DSCH data frame.

The base station 300 may further include a mapping relationship management unit configured to establish a mapping relationship between the E-RNTI and H-RNTI of the mobile station. The acquisition unit 302 searches in the mapping relationship management unit according to the H-RNTI of the mobile station carried in the HS-DSCH data frame to acquire the E-RNTI corresponding to the mobile station.

The base station 300 provided in this embodiment schedules downlink data according to the situation that the mobile station occupies the common E-DCH resource. This avoids the waste of the common E-DCH resource due to the use of the discontinuous scheduling when the mobile station occupies the common E-DCH resource, and therefore improving the utilization of the common E-DCH resource.

### Embodiment 4

In this embodiment, the present invention provides a mobile communications system configured to implement the method for scheduling data provided in the foregoing embodiments. As shown in FIG. 4, the mobile communications system includes a mobile station 400, a base station 401, and an RNC 402. It is necessary to explain that, the RNC 402 in this embodiment is only one example of a radio network control device. During the specific implementation, the function of the RNC 402 in this embodiment may be implemented by other network entities according to different systems.

The base station 401 receives an HS-DSCH data frame delivered to the mobile station 400. The HS-DSCH data frame carries an E-RNTI of the mobile station 400. The base station 401 determines whether the mobile station 400 occupies a common E-DCH resource according to the E-RNTI. If the mobile station occupies the common E-DCH resource, the data in the HS-DSCH data frame is scheduled continuously.

Further, a mapping relationship between an E-RNTI and an H-RNTI of a mobile station may be maintained in the base station 401. Even if the HS-DSCH data frame delivered to the mobile station 400 received by the base station 401 does not carry the E-RNTI of the mobile station 400, the base station 401 may also search for the mapping relationship according to an H-RNTI of the mobile station 400 carried in the HS-DSCH data frame to acquire the E-RNTI corresponding to the mobile station 400, determine whether the mobile station 400 occupies the common E-DCH resource according to the E-RNTI, and if the mobile station 400 occupies the common E-DCH resource, schedule the data in the HS-DSCH data frame continuously.

Please refer to Embodiment 3 for the specific structure of the base station 401 in this embodiment.

The base station 401 provided in this embodiment schedules downlink data according to the situation that the mobile station 400 occupies the common E-DCH resource. This avoids the waste of the common E-DCH resource due to the use of the discontinuous scheduling when the mobile station 400 occupies the common E-DCH resource, and therefore improving the utilization of the common E-DCH resource.

Part of the steps in the embodiments of the present invention may be implemented with software, and corresponding software programs may be stored in a readable storage medium such as an optical disk or a hard disk.

The foregoing embodiments are not intended to limit the present invention.

## Claims

1. A method for scheduling data of a base station, comprising:
receiving (101, 201), by a base station, a High Speed Downlink Shared Channel, HS-DSCH, data frame from a radio network controller;
acquiring (101, 202), by the base station, an Enhanced Dedicated Channel, E-DCH, Radio Network Temporary Identifier, E-RNTI, of a mobile station to which the HS-DSCH data frame is sent according to the HS-DSCH data frame; and
if the base station determines that the mobile station is using a common E-DCH resource through determining that the E-RNTI of the mobile station matches one of E-RNTIs of mobile stations that succeed in the competition and are using common E-DCH resource, which are recorded by the base station, applying, by the base station, continuous scheduling for transmission of data in the HS-DSCH data frame towards the mobile station (102, 103, 203, 204), and
if the base station determines that the mobile station is not using a common E-DCH resource through determining that the E-RNTI of the mobile station does not match one of E-RNTIs of mobile stations that succeed in the competition and are using common E-DCH resource, which are recorded by the base station,, applying, by the base station, discontinuous scheduling for transmission of data in the HS-DSCH data frame towards the mobile station (102, 104, 203, 205).

2. The method for scheduling data of a base station according to claim 1, wherein the HS-DSCH data frame carries the E-RNTI of the mobile station to which the HS-DSCH data frame is sent.

3. The method for scheduling data of a base station according to claim 1, wherein before the receiving of the HS-DSCH data frame, the method further comprises:
establishing, by the bases station, a mapping relationship between the E-RNTI and a High Speed Downlink Shared Channel, HS-DSCH, Radio Network Temporary Identifier, H-RNTI, of the mobile station to which the HS-DSCH data frame is sent according to an E-RNTI and an H-RNTI carried in a HS-DSCH data frame sent from the radio network controller to the mobile station; and
wherein the acquiring an E-RNTI of the mobile station according to the HS-DSCH data frame further comprises:
acquiring an E-RNTI corresponding to the mobile station by searching the mapping relationship according to an H-RNTI of the mobile station carried in the HS-DSCH data frame received after establishing the mapping relationship.

4. A base station (12, 300, 400), comprising:
a receiving unit (301, 401), configured to receive a High Speed Downlink Shared Channel, HS-DSCH, data frame from a radio network controller;
an acquisition unit (302), configured to acquire an Enhanced Dedicated Channel, E-DCH, Radio Network Temporary Identifier, E-RNTI, of a mobile station to which the HS-DSCH data frame is sent according to the HS-DSCH data frame;
a determining unit (303), configured to determine whether the mobile station is using a common E-DCH resource through determining whether the E-RNTI of the mobile station matches one of E-RNTIs of mobile stations that succeed in the competition and are using common E-DCH resource, which are recorded by the base station; and
a scheduling unit (304), configured to
apply continuous scheduling for transmission of data in the HS-DSCH data frame towards the mobile station, if a determination result of the determining unit is that the mobile station is using a common E-DCH resource, and
apply discontinuous scheduling for transmission of data in the HS-DSCH data frame towards the mobile station, if the determination result of the determining unit is that the mobile station is not using a common E-DCH resource.

5. The base station according to claim 4, wherein the HS-DSCH data frame received by the receiving unit carries the E-RNTI of the mobile station to which the HS-DSCH data frame is sent, and
the acquisition unit is further configured to directly acquire the E-RNTI of the mobile station from the HS-DSCH data frame.

6. The base station according to claim 4, wherein the base station further comprises:
a mapping relationship management unit (12), configured to establish a mapping relationship between the E-RNTI and a High Speed Downlink Shared Channel, HS-DSCH, Radio Network Temporary Identifier, H-RNTI, of the mobile station according to an E-RNTI and an H-RNTI carried in a HS-DSCH data frame sent from the radio network controller to the mobile station; and
wherein the acquisition unit is further configured to acquire an E-RNTI corresponding to the mobile station by searching the mapping relationship management unit according to the H-RNTI of the mobile station carried in the HS-DSCH data frame received after establishing the mapping relationship.

7. A mobile communications system, comprising a base station according to any one of claims 4 to 6.

8. The mobile communications system according to claim 7, wherein the mobile communications system further comprises the mobile station.

9. The mobile communications system according to claim 7 or 8, wherein the mobile communications system further comprises the radio network control device configured to transmit the HS-DSCH data frame that carries the E-RNTI of the mobile station to which the HS-DSCH data frame is sent.

## Patentansprüche

1. Verfahren zur Planung von Daten einer Basisstation, das Folgendes umfasst:
Empfangen (101, 201) durch eine Basisstation eines Datenrahmens eines gemeinsam verwendeten Hochgeschwindigkeitsabwärtsstreckenkanals (High Speed Downlink Shared Channel data frame, HS-DSCH-Datenrahmen), von einer Funknetzsteuereinheit;
Erfassen (101, 202) durch die Basisstation einer temporären Funknetzkennung (E-DCH Radio Network Temporary Identifier, E-RNTI) eines verbesserten dedizierten Kanals (E-DCH) einer Mobilstation, zu der der HS-DSCH-Datenrahmen gemäß dem HS-DSCH-Datenrahmen gesendet wird; und
falls die Basisstation bestimmt, dass die Mobilstation ein allgemeines E-DCH-Betriebsmittel verwendet, durch Bestimmen, dass die E-RNTI der Mobilstation mit einer der E-RNTI von Mobilstationen, die in Konkurrenz erfolgreich sind und das allgemeine E-DCH-Betriebsmittel verwenden, die durch die Basisstation aufgezeichnet sind, übereinstimmt, Anwenden kontinuierlicher Planung durch die Basisstation für die Übertragung von Daten in dem HS-DSCH-Datenrahmen zu der Mobilstation (102, 103, 203, 204) und
falls die Basisstation bestimmt, dass die Mobilstation kein allgemeines E-DCH-Betriebsmittel verwendet, durch Bestimmen, dass die E-RNTI der Mobilstation mit einer der E-RNTI von Mobilstationen, die in Konkurrenz erfolgreich sind und das allgemeine E-DCH-Betriebsmittel verwenden, die durch die Basisstation aufgezeichnet sind, nicht übereinstimmt, Anwenden diskontinuierlicher Planung durch die Basisstation für die Übertragung von Daten in dem HS-DSCH-Datenrahmen zu der Mobilstation (102, 104, 203, 205).

2. Verfahren zum Planen von Daten einer Basisstation nach Anspruch 1, wobei der HS-DSCH-Datenrahmen die E-RNTI der Mobilstation führt, zu der der HS-DSCH-Datenrahmen gesendet wird.

3. Verfahren zum Planen von Daten einer Basisstation nach Anspruch 1, wobei das Verfahren vor dem Empfangen des HS-DSCH-Datenrahmens ferner Folgendes umfasst:
Aufbauen durch die Basisstation einer Abbildungsbeziehung zwischen der E-RNTI und einer temporären Funknetzkennung (HS-DSCH Radio Network Temporary Identifier, H-RNTI) eines gemeinsam verwendeten Hochgeschwindigkeitsabwärtsstreckenkanals, HS-DSCH, der Mobilstation, zu der der HS-DSCH-Datenrahmen gesendet wird, gemäß einer E-RNTI und einer H-RNTI, die in einem HS-DSCH-Datenrahmen geführt sind, der von der Funknetzsteuereinheit zu der Mobilstation gesendet wird; und
wobei das Erfassen einer E-RNTI der Mobilstation gemäß dem HS-DSCH-Datenrahmen ferner Folgendes umfasst:
Erfassen einer E-RNTI, die der Mobilstation entspricht, durch Durchsuchen der Abbildungsbeziehung gemäß einer H-RNTI der Mobilstation, die in dem HS-DSCH-Datenrahmen geführt ist, der nach dem Aufbauen der Abbildungsbeziehung empfangen wird.

4. Basisstation (12, 300, 400), die Folgendes umfasst:
eine Empfangseinheit (301, 401), die konfiguriert ist, einen Datenrahmen eines gemeinsam verwendeten Hochgeschwindigkeitsabwärtsstreckenkanals, HS-DSCH-Datenrahmen, von einer Funknetzsteuereinheit zu empfangen;
eine Erfassungseinheit (302), die konfiguriert ist, eine temporäre Funknetzkennung, E-RNTI, eines verbesserten dedizierten Kanals, E-DCH, einer Mobilstation, zu der der HS-DSCH-Datenrahmen gemäß dem HS-DSCH-Datenrahmen gesendet wird, zu erfassen;
eine Bestimmungseinheit (303), die konfiguriert ist zu bestimmen, ob die Mobilstation ein allgemeines E-DCH-Betriebsmittel verwendet, durch Bestimmen, ob die E-RNTI der Mobilstation mit einer der E-RNTI von Mobilstationen, die in Konkurrenz erfolgreich sind und die das allgemeine E-DCH-Betriebsmittel verwenden, die durch die Basisstation aufgezeichnet sind, übereinstimmt; und
eine Planungseinheit (304), die konfiguriert ist,
kontinuierliche Planung zur Übertragung von Daten in dem HS-DSCH-Datenrahmen zu der Mobilstation anzuwenden, falls ein Bestimmungsergebnis der Bestimmungseinheit ist, dass die Mobilstation ein allgemeines E-DCH-Betriebsmittel verwendet, und
diskontinuierliche Planung zur Übertragung von Daten in dem HS-DSCH-Datenrahmen zu der Mobilstation anzuwenden, falls das Bestimmungsergebnis der Bestimmungseinheit ist, dass die Mobilstation kein allgemeines E-DCH-Betriebsmittel verwendet.

5. Basisstation nach Anspruch 4, wobei der durch die Empfangseinheit empfangene HS-DSCH-Datenrahmen die E-RNTI der Mobilstation, zu der der HS-DSCH-Datenrahmen gesendet wird, führt, und
die Erfassungseinheit ferner konfiguriert ist, die E-RNTI der Mobilstation direkt aus dem HS-DSCH-Datenrahmen zu erfassen.

6. Basisstation nach Anspruch 4, wobei die Basisstation ferner Folgendes umfasst:
eine Abbildungsbeziehungsmanagementeinheit (12), die konfiguriert ist, eine Abbildungsbeziehung zwischen der E-RNTI und einer temporären Funknetzkennung, H-RNTI, eines gemeinsam verwendeten Hochgeschwindigkeitsabwärtsstreckenkanals, HS-DSCH, der Mobilstation gemäß einer E-RNTI und einer H-RNTI, die in einem HS-DSCH-Datenrahmen geführt sind, der von der Funknetzsteuereinheit zu der Mobilstation gesendet wird, aufzubauen; und
wobei die Erfassungseinheit ferner konfiguriert ist, eine E-RNTI, die der Mobilstation entspricht, durch Durchsuchen der Abbildungsbeziehungsmanagementeinheit gemäß der H-RNTI der Mobilstation, die in dem nach dem Aufbauen der Abbildungsbeziehung empfangenen HS-DSCH-Datenrahmen geführt ist, zu erfassen.

7. Mobilkommunikationssystem, das eine Basisstation nach einem der Ansprüche 4 bis 6 umfasst.

8. Mobilkommunikationssystem nach Anspruch 7, wobei das Mobilkommunikationssystem ferner die Mobilstation umfasst.

9. Mobilkommunikationssystem nach Anspruch 7 oder 8, wobei das Mobilkommunikationssystem ferner die Funknetzsteuervorrichtung umfasst, die konfiguriert ist, den HS-DSCH-Datenrahmen, der die E-RNTI der Mobilstation führt, zu der der HS-DSCH-Datenrahmen gesendet wird, zu übertragen.

## Revendications

1. Procédé de planification de données d'une station de base, comprenant les étapes suivantes :
recevoir (101, 201), par une station de base, une trame de données de canal partagé de liaison descendante à grande vitesse, HS-DSCH, à partir d'un contrôleur de réseau de radiocommunication ;
acquérir (101, 202), par la station de base, un identifiant temporaire de réseau de radiocommunication de canal dédié étendu E-DCH, E-RNTI, d'une station mobile à laquelle la trame de données HS-DSCH est envoyée selon la trame de données HS-DSCH ; et
si la station de base détermine que la station mobile utilise une ressource E-DCH commune en jugeant que le E-RNTI de la station mobile correspond à un des E-RNTI des stations mobiles qui sont retenues et utilisent une ressource E-DCH commune, qui sont enregistrés par la station de base, appliquer, par la station de base, une planification continue pour une transmission de données dans la trame de données HS-DSCH vers la station mobile (102, 103, 203, 204), et
si la station de base détermine que la station mobile n'utilise pas une ressource E-DCH commune en jugeant que le E-RNTI de la station mobile ne correspond pas à l'un des E-RNTI des stations mobiles qui sont retenues et utilisent une ressource E-DCH commune,
qui sont enregistrés par la station de base, appliquer, par la station de base, une planification discontinue pour une transmission de données dans la trame de données HS-DSCH vers la station mobile (102, 104, 203, 205).

2. Procédé de planification de données d'une station de base selon la revendication 1, dans lequel la trame de données HS-DSCH contient le E-RNTI de la station mobile à laquelle la trame de données HS-DSCH est envoyée.

3. Procédé de planification de données d'une station de base selon la revendication 1, comprenant en outre l'étape suivante, avant l'étape consistant à recevoir la trame de données HS-DSCH :
établir, par la station de base, une relation de mappage entre le E-RNTI et un identifiant temporaire de réseau de radiocommunication de canal partagé de liaison descendante à grande vitesse HS-DSCH, H-RNTI, de la station mobile à laquelle la trame de données HS-DSCH est envoyée selon un E-RNTI et un H-RNTI contenus dans une trame de données HS-DSCH envoyée à partir du contrôleur de réseau de radiocommunication à la station mobile ; et
l'étape consistant à acquérir un E-RNTI de la station mobile selon la trame de données HS-DSCH comprenant en outre l'étape suivante :
acquérir un E-RNTI correspondant à la station mobile en recherchant la relation de mappage selon un H-RNTI de la station mobile contenu dans la trame de données HS-DSCH reçue après l'établissement de la relation de mappage.

4. Station de base (12, 300, 400), comprenant :
une unité de réception (301, 401), configurée pour recevoir une trame de données de canal partagé de liaison descendante à grande vitesse, HS-DSCH, à partir d'un contrôleur de réseau de radiocommunication ;
une unité d'acquisition (302), configurée pour acquérir un identifiant temporaire de réseau de radiocommunication de canal dédié étendu E-DCH, E-RNTI, d'une station mobile à laquelle la trame de données HS-DSCH est envoyée selon la trame de données HS-DSCH ;
une unité de détermination (303), configurée pour déterminer si la station mobile utilise une ressource E-DCH commune en jugeant si le E-RNTI de la station mobile correspond à l'un des E-RNTI des stations mobiles qui sont retenues et utilisent une ressource E-DCH commune, qui sont enregistrés par la station de base ; et
une unité de planification (304), configurée pour appliquer une planification continue pour une transmission de données dans la trame de données HS-DSCH vers la station mobile, si un résultat de détermination de l'unité de détermination est que la station mobile utilise une ressource E-DCH commune, et
appliquer une planification discontinue pour une transmission de données dans la trame de données HS-DSCH vers la station mobile, si le résultat de détermination de l'unité de détermination est que la station mobile n'utilise pas une ressource E-DCH commune.

5. Station de base selon la revendication 4, la trame de données HS-DSCH reçue par l'unité de réception contenant le E-RNTI de la station mobile à laquelle la trame de données HS-DSCH est envoyée, et
l'unité d'acquisition étant en outre configurée pour acquérir directement le E-RNTI de la station mobile à partir de la trame de données HS-DSCH.

6. Station de base selon la revendication 4, comprenant en outre :
une unité de gestion de relation de mappage (12), configurée pour établir une relation de mappage entre le E-RNTI et un identifiant temporaire de réseau de radiocommunication de canal partagé de liaison descendante à grande vitesse HS-DSCH, H-RNTI, de la station mobile selon un E-RNTI et un H-RNTI contenus dans une trame de données HS-DSCH envoyée à partir du contrôleur de réseau de radiocommunication à la station mobile ; et
l'unité d'acquisition étant en outre configurée pour acquérir un E-RNTI correspondant à la station mobile en recherchant l'unité de gestion de relation de mappage selon le H-RNTI de la station mobile contenu dans la trame de données HS-DSCH reçue après l'établissement de la relation de mappage.

7. Système de communication mobile, comprenant une station de base selon l'une quelconque des revendications 4 à 6.

8. Système de communication mobile selon la revendication 7, comprenant en outre la station mobile.

9. Système de communication mobile selon la revendication 7 ou 8, comprenant en outre le dispositif de commande de réseau de radiocommunication configuré pour transmettre la trame de données HS-DSCH qui contient le E-RNTI de la station mobile à laquelle la trame de données HS-DSCH est envoyée.
